Europäisches Patentamt

European Patent Office

Office européen des brevets

(19)

(11) Veröffentlichungsnummer: **0 207 928**
**A2**

## (12) EUROPÄISCHE PATENTANMELDUNG

(21) Anmeldenummer: 86890154.7

(22) Anmeldetag: 27.05.86

(51) Int. Cl.4 **C05D 11/00** , C05D 9/00 , C05D 3/04

(30) Priorität: 04.06.85 AT 1686/85

(43) Veröffentlichungstag der Anmeldung:
07.01.87 Patentblatt 87/02

(84) Benannte Vertragsstaaten:
AT BE CH DE FR GB IT LI LU NL SE

(71) Anmelder: SAVECO TECHNOLOGY
ASSOCIATES LIMITED
29/30 Fitzroy Square
London W1P 5HH(GB)

(72) Erfinder: Kraljevic, Gojko, Dr. Dipl.-Ing.
Njegoseva 9
YU-11000 Belgrad(YU)

(74) Vertreter: Kliment, Peter, Dipl.-Ing. Mag.-jur.
Singerstrasse 8
A-1010 Wien(AT)

(54) Düngmittel und Verfahren zur Herstellung derselben.

(57) Die Erfindung betrifft ein Düngemittel, das sich zur Förderung des Pflanzenwachstums, zur Verhinderung der Einwirkungen von Umweltverschmutzung auf die Vegetation und zu einer wesentlichen Sanierung von Umweltschäden eignet, und ein Verfahren zur Herstellung eines solchen Düngemittels. Das erfindungsgemäße Düngemittel enthält einen Calcium und Magnesium enthaltenden Zeolithen, z.B. einen Clinoptilolithen und ein Düngemittel mit kalzifizierender Wirkung, z.B. Thomasmehl. Durch diese Kombination konnten hervorragende Ergebnisse mit Bezug auf die Erhöhung von Ernteerträgen und zur Sanierung absterbender Kulturen, insbesondere auf Grund der Aktivierung von Bodenbakterien und einer allmählichen, und regelmäßigen Ca-Abgabe, erreicht werden.

EP 0 207 928 A2

## Düngmittel und Verfahren zur Herstellung derselben

Die Erfindung betrifft ein Düngemittel, das sich zur Förderung des Pflanzenwachstums, zur Verhinderung der Einwirkungen von Umweltverschmutzung auf die Vegetation und zu einer wesentlichen Sanierung von Umweltschäden eignet, und ein Verfahren zur Herstellung eines solchen Düngemittels.

Die Erfindung beruht auf der Erkenntnis, daß bei Verwendung bestimmter Zeolithe zusammen mit kalzifizierenden Mineraldüngemitteln eine Kombination von Vorteilen erzielt werden kann, die für das Planzenwachstum und den Umweltschutz von wesentlicher Bedeutung ist und die mit bekannten Düngemitteln nicht erreichbar ist.

Bekannt ist die Verwendung von Zeolithen in Wachstumförderern für Pflanzen zusammen mit einem "langsam freisetzenden" Stickstoff enthaltenden, organischen Material, z.B. Abwasserschlamm oder kompostierten Abfallmaterialien, wobei der Zeolith zur Regelung der Freisetzung von Ammoniumionen und anderen Kationen aus zugesetztem Stickstoff "schnell freisetzendem" Dünger oder aus dem Boden eingesetzt wird. Ferner sind Pflanzen-Wachstumsförderer bekannt, die einen mit 0,1 bis 0,5 % Stickstoff und Phosphor behandelten Clinoptilolith sowie Vermiculit und Torf enthalten.

Das erfindungsgemäße Düngemittel ist dadurch gekennzeichnet, daß es einen Calcium und Magnesium enthaltenden Zeolithen mit einem Gehalt von etwa 60 -70 $SiO_2$ und etwa 10 bis 16 % $Al_2O_3$ und ein Mineraldüngemittel enthält, das eine kalzifizierende Wirkung hat. Bevorzugt wird ein Düngemittel das 50 bis 70 Gew.-%, vorzugsweise 60 Gew.-% Zeolith und 30 bis 50 Gew.-%, vorzugsweise 40 Gew.-% Mineraldüngemittel mit kalzifizierender Wirkung enthält.

Es konnte ferner festgestellt werden, daß die vorteilhaften Wirkungen solcher Düngemittel, insbesonders mit Bezug auf eine Sofortwirkung derselben, durch Zusatz einer an sich mit Bezug auf Pflanzenwachstumsförderung bekannten Nährlösung zu dem Zeolithen verstärkt werden können.

Das erfindungsgemäße Verfahren zur Herstellung von Düngemitteln dieser Art besteht darin, daß man den Zeolithen mit einer wässerigen Nährlösung mischt, und die so erhaltene Masse mit dem kalzifizierenden Mineraldüngemittel vermischt, wobei man, bezogen auf den Zeolithen 8 bis 12 Gew.-%, vorzugsweise 10 Gew.-% Nährlösung und 50 bis 70 Gew.-%, vorzugsweise 60 Gew.-% Mineraldüngemittel einsetzt.

Mittels einer Kalzifizierung wird versucht eine Entsäuerung und Auflockerung des Bodens sowie eine erhöhte mikrobiologische Aktivität zu erreichen, wobei die Pflanzen ein besseres Wachstum, einen verstärkten Kreislauf, eine bessere Widerstandsfähigkeit gegen Schädlinge und Umwelteinflüsse und einen erhöhten osmotischen Druck aufweisen sollen. Bei Verwendung vieler bekannter kalzifizierender Düngemittel bedingt jedoch eine zu schnelle und unregelmäßige Aufnahme von physiolisch aktivem CaO eine sofortige Erhöhung des pH-Wertes und dann eine Senkung desselben nach jedem Niederschlag. Man spricht von einer Schockwirkung des Kalkes, durch welche bei Pflanzen schwerwiegende Kreislaufprobleme entstehen, so daß viele der vorstehend angeführten erwünschten Kalzifierungs-Effekte nicht erzielt werden können.

Ein erfindungsgemäßes Düngemittel gewährleistet eine allmähliche, regelmäßige Abgabe von Calcium und bietet darüber hinaus die im folgenden kurz zusammengefaßte Kombination von Vorteilen.

1. Speicherung von Sonnenenergie; dadurch Verbesserung der Photosynthese der Pflanzen;

2. Speicherung von Feuchtigkeit aus der Luft; bei Trockenperioden Aufnahme von Luftfeuchtigkeit und Feuchtigkeit aus z.B. Morgennebeln; dadurch Wirkung als Feuchtigkeitsregulator;

3. Speicherung von $O_2$, $N_2$ und Feuchtigkeit aus der Luft, dadurch Erhöhung der mikrobiologischen Aktivität.

4. Auflockerung des Bodens, insbesondere dadurch, daß der Zeolith Sauerstoff aufnimmt und diesen wieder abgibt.

5. Der Zeolith aktiviert die Bakterien, diese fixieren Stickstoff aus der Luft und sorgen damit für eine natürliche Ernährung der Pflanzen, wodurch ein allfälliger Zusatz von Nitraten oder Nitriten oder Nährlösungen verringert bzw. meist vermieden werden kann.

6. Ionenaustausch und Absorption; dadurch a) Neutralisation des sauren Bodens und Aufnahme von Schadstoffen, wie Stickoxi den und Kohlenmonoxid aus der Luft und b) allmähliche Abgabe der Nährstoffe und des Calciums je nach Bedarf der Pflanzen.

Die erfindungsgemäße Vereinigung von Zeolithen und kalzifizierenden Düngemitteln führt dank dieser Kombination von Vorteilen zu völlig unerwarteten, verblüffenden Erfolgen von weltweiter Bedeutung für die Forst-und Landwirtschaft und den Umweltschutz sowie die Sanierung von Umweltschäden, insbesondere des Waldsterbens. Einige der bisher durch Verwendung erfindungsgemäßer Düngemittel erzielten Erfolge sind am Ende dieser Beschreibung vorliegender Erfindung angeführt.

So konnten z.B. Wälder und Obstkulturen, die ein deutliches Absterben zeigten, gerettet, bei Maisernten und Wiesenkulturen ein wesentlich höherer Ertrag erzielt und in Weingärten an Spritzmittel eingespart und gleichfalls Höchsterträge erreicht werden.

In erfindungsgemäßen Düngemitteln können z.B. in England und Jugoslawien vorkommende Clinoptilolithe etwa folgender Zusammensetzung verwendet werden:

a)

| | |
|---|---|
| $SiO_2$ | 61,96 bis 67,17 |
| $TiO_2$ | 0,15 bis 0,23 |
| $Al_2O_3$ | 12,46 bis 15,20 |
| $Fe_2O_3$ | 0,98 bis 2,05 |
| $MnO$ | Spuren bis 0,05 |
| $MgO$ | 1,30 bis 1,96 |
| $CaO$ | 3,03 bis 4,35 |
| $Na_2O$ | 0,70 bis 1,11 |
| $K_2O$ | 0,78 bis 1,32 |
| $H_2O$ -Verlust (100°C) | 4,05 bis 4,74 |
| $H_2O$-Verlust (1000°C) | 7,56 bis 9,56 |

Es können aber auch andere Zeolithe erfindungsgemäß eingesetzt werden, wie z.B. ein in den USA vorkommender Clinoptilolith mit etwa folgender Zusammensetzung:

b)

| | |
|---|---|
| $SiO_2$ | 61,10 |
| $Al_2O_3$ | 10,52 |
| $Fe_2O_3$ | 0,91 |
| $TiO_2$ | 0,36 |
| $CaO$ | 3,34 |
| $MgO$ | 0,47 |
| $Na_2O$ | 5,30 |
| $K_2O$ | 1,48 |
| $H_2O$-Verlust (110°C) | 8,36 |
| $H_2O$-Verlust (900°C) | 8,72. |

Bevorzugte Mineraldüngemittel sind feingemahlene Sedimentmineralien mit etwa folgender Zusammensetzung:

a)

| | | |
|---|---|---|
| Wasser | | 1,16 % |
| Asche | | 94,71 % |
| Organischer Anteil | | 4,13 % |
| Gesamt Phosphorsäure $P_2O_5$ | | 0,046 % |
| Gesamt Kalium $K_2O$ | | 0,181 % |
| Salzsäureunlösliche Bestandteile | | 9,29 % |
| Kalk, CaO | | 55,27 % |
| Magnesium MgO | | 2,74 % |
| Natrium $Na_2O$ | | 0,094 % |
| Eisenoxid $Fe_2O_3$ | | 0,72 % |
| Aluminiumoxid $Al_2O_3$ | | 1,20 % |
| Kohlensäure $CO_2$ | | 23,64 % |
| berechnet als kohlensaurer Kalk ($CaCO_3$) | | 53,76 % |
| Kupfer | Cu | 13,3 ppm |
| Mangan Mn | Mn | 145 ppm |
| Zink | Zn | 30 ppm |
| Eisen | Fe | 4960 ppm |
| Kobalt | Ce | 2,60 ppm |
| Molybdän | Mo | 1,75 ppm |
| pH( in $H_2O$ ) | | 6,8 - 7,2 |

b)

| | |
|---|---|
| Wasser | 6,41 % |
| Rohasche | 89,40 % |
| Organ. Substanz | 4,19 % |
| Salzsäure unlösl. (Sand + Ton) | 11,66 % |
| Gesamt Stickstoff n. Kjeldahl | 0,010 % |
| Gesamt-Phosphor $P_2O_5$ | 0,02 % |
| Gesamt Kalium $K_2O$ | 0,19 % |
| Calcium CaO | 38,56 % |
| Magnesium MgO | 2,29 % |
| Natrium $Na_2O$ | 0,12 % |
| pH | 8,85 |
| Kohlensäure $CO_2$ | 32,83 % |
| $CaCO_3$ (ber. aus $CO_2$) | 74,66 % |
| $Fe_2O_3$ | 0,92 % |
| $Al_2O_3$ | 2,71 % |
| Kupfer  Cu | 4,4 mg/kg |
| Mangan  Mn | 136  " / " |
| Eisen  Fe | 6 450  " / " |
| Zink  Zn | 15  " / " |
| Kobalt  Co | 1,50" / " |
| Molybdän Mo | 0,75" / " |

Weitere erfindungsgemäß verwendbare Düngemittel mit kalzifizierender Wirkung sind z.B. Urgesteins-und Thomasmehl, Kalkmergel, Mischkalk, Abfallkalke, z.B. Hüttenkalk, sowie Holzasche und Flugasche.

Mit Bezug auf Pflanzenwachstumförderung bekannte Nährlösungen enthalten üblicherweise N,P,K und Mg. Als Beispiel sei eine Analyse einer solchen Nährlösung angeführt:

| | |
|---|---|
| N | 14 % |
| $P_2O_5$ | 10 % |
| $K_2O$ | 14 % |
| MgO | 0,7 % |
| B | 0,05% |
| Cu | 0,04% |
| Mn | 0,1 % |
| Zn | 0,02 % |

sowie Mo und Co

Erfindungsgemäße Düngemittel eignen sich allgemein für landwirtschaftliche und forstwirtschaftliche Zwecke, für den Obst-und Weinbau, als Blumendünger und insbesondere als Walddünger. Es hat sich als zweckmäßig erwiesen einem erfindungsgemäß zusammengesetzten Düngemittel, dessen Zeolith eine Korngröße von 1 -2 mm aufweist, noch etwa 5 -10 % feingemahlenen Zeolith mit einer Korngröße von 0 bis 0,3 mm hinzuzufügen.

Ein bevorzugt eingesetzter Nadelwanddünger enthält eine Nährlösung mit einem Gehalt von 3 -5 % N und zusätzlich 2 -4 % Borax und 2 -4 % Glaubersalz. Die Verwendung derartiger Düngemittel ergibt bei Jungwäldern eine Auffrischung und ein bedeutend verbessertes Wachstum, hilft bei erkrankten Wäldern und verhindert die Ausbreitung des Waldsterbens.

Erfindungsgemäße Düngemittel, die als Blumendünger dienen sollen, enthalten vorzugsweise nur etwa 30 Gew.-% Zeolith und 70 Gew.-% kalzifizierendes Düngemittel.

Die erfindungsgemäß erzielbaren Erfolge sollen an Hand nachstehender Beispiele ersichtlich gemacht werden. Verwendet wurde eine Mischung eines Clinoptilolithen der vorstehend unter a) angeführten Art, dessen Wassergehalt durch Erhitzen auf etwa 180°C auf etwa 2 % gebracht worden war, mit einem kalzifizierenden Düngemittel, das vorstehend mit a) bezeichnet ist. Die Korngrößen des nachstehend mit "Z" bezeichneten Clinoptilolithen lagen zwischen 0,0 und 0,3 mm, diejenigen des mit "k.D." bezeichneten kalzifizierenden Düngemittels zwischen 0 -1 mm.

Bei Verwendung größerer Korngrößen etwa bis zu 2 mm Zeolith sind größere Mengen Düngemittel erforderlich. Die Zusätze zu den Düngemitteln je nach der zu behandelnden Kultur, wie $MgSO_4$, $Na_2SO_4$, Harnstoff und Borax, sind bekannt. Unter "Absterbestufen" werden verstanden:

1. Leichte Durchlichtung der Krone, leichte Vergilbung der Blätter, Wachstumsschaden bis 21 %;

2. 21 -51 % weniger Wachstum, Blätter werden kleiner und vergilben, Durchlichtung der Krone, leichteres Brechen von Ästen;

3. Über 51 % weniger Wachstum, Senkung des osmotischen Druckes, und dadurch der Vitalität, Absenkung der Äste

4. Tod

**Beispiel 1:**

Eichenwald
Fläche:                        1/2 ha
Baumart:                       Stiel- und Traubeneichen
Alter:                         80 - 100 Jahre
Lage:                          2. und 3. Absterbestufe
Düngung:                       Ende Mai
Düngungsmenge:                 5 kg pro Baum; 2,5 kg Z. + 1,5 kg k.D.
                               + 0,5 kg $MgSO_4$ + 0,5 kg $Na_2SO_4$
Erfolg:                        Oktober, volle, dichte und tiefgrüne
                               Belaubung, Blattgröße wieder normal

**Beispiel 2:**

Kultur:                        Mammut Silomais
Fläche:                        50 a
Bodenbeschaffenheit:           schwer und lehmig
Düngung:                       Mitte April
Menge:                         1000 kg; 500 kg Z. + 300 kg k.D.
                               + 200 kg Harnstoff
Erfolg:                        Bodenauflockerung, bei Ernte um 1700 kg
                               Mehrertrag

**Beispiel 3:**

Kultur:                        Weingärten (Blau Fränkisch, Müller
                                        Thurgau, Zweigelt)
Fläche:                        insgesamt 1,5 ha
Bodenbeschaffenheit:           schwer und lehmig
Lage:                          Chlorose
Düngung:                       April
Menge:                         1200 kg; 500 kg Z. + 400 kg k.D. +
                               100 kg $MgSO_4$
Erfolg:                        Bodenauflockerung, Einsparung von 6
                               Behandlungen mit Spritzmittel, Behe-
                               bung der Chlorose, Höchsterträge,
                               Zuckergehalt um mind. 4 Klosterneu-
                               burger-Grade höher

**Beispiel 4:**

Wiese:
Fläche:                        1 ha
Bodenbeschaffenheit:           saurer Boden
Düngung:                       Anfang April
Menge:                         1200 kg; 600 kg Z. + 600 kg k.D.
Erfolge:                       Neutralstellung des pH-Wertes, natür-
                               licher Bewuchs von Luzerne und Klee,
                               öfters gemäht, mehr Ertrag

Beispiel 5:

| | |
|---|---|
| Kultur: | Obstbau |
| Fläche: | 1/2 ha |
| Bodenbeschaffenheit: | lehmig |
| Baume krank und dürr, 3. Absterbestufe | |
| Düngung: | August |
| Menge: | 1200 kg; 500 kg Z. + 400 kg k.D. + 100 kg MgSO$_4$ |
| Erfolg: | bereits im September kräftige Triebe |

An Stelle des bei diesen Versuchen eingesetzten kalzifizierenden Düngemittels können mit gleichfalls überraschenden Erfolgen auch andere kalzifizierende Düngemittel verwendet werden.

So wurden 3 Dänglastannen mit einer Absterbestufe 3 mit 50 -80 g Düngemittel pro Baum behandelt, das einen Clinoptilolithen (a oder b) und Thomasmehl im Verhältnis 1 : 1 und etwas Borax enthielt. Bereits nach einer Woche wiesen die so behandelten Tannen eine wiedererlangte starke Vitalität auf.

Mit einem Düngemittel gleicher Art, das jedoch an Stelle von Thomasmehl Flugasche enthielt, wurden serbische, 15jährige Fichten, die ebenfalls die Symptome der Absterbestufe 3 aufwiesen, behandelt. Diese Fichten erlangten nach 2 Wochen eine starke Vitalität zurück.

Versuche mit Zeolithen, die einen höheren SiO$_2$-und Al$_2$O$_3$-Gehalt, also etwa bis zu 75 % SiO$_2$ und etwa bis zu 20 % Al$_2$O$_3$, zeigten ähnliche Erfolge, wobei jedoch bei Verwendung solcher Zeolithe infolge eines geringeren Ionenaustausches um etwa 2 bis 5 Gew.-% mehr Düngemittel eingesetzt werden mußten als bei obigen Versuchen.

Dank der vorstehend aufgezeigten verschiedenen Vorteile, die bei Verwendung erfindungsgemäßer Düngemittel erzielt werden können, kann bereits ein geringer Zusatz von Zeolith zu kalzifizierendem Düngemittel z.B. bei Düngung von Blumen bzw. von geringen Mengen eines solchen Düngemittels zu Zeolith z.B. bei Behandlung stark saurer Böden, erhebliche Erfolge bringen.

**Ansprüche**

1. Düngemittel, dadurch gekennzeichnet, daß es einen Calcium und Magnesium enthaltenden Zeolithen mit einem Gehalt von etwa 60 -70 % SiO$_2$ und 10 -16 % Al$_2$O$_3$ und ein Mineraldüngemittel enthält, das eine kalzifizierende Wirkung hat.

2. Düngemittel nach Anspruch 1, dadurch gekennzeichnet, daß es 50 -70 Gew.-%, vorzugsweise 60 Gew.-% Zeolith, und 30-50 Gew.-%, vorzugsweise 40 Gew.-% Mineraldüngemittel mit kalzifizierender Wirkung enthält.

3. Düngemittel nach Anspruch 1 oder 2, dadurch gekennzeichnet, daß der Zeolith durch Zusatz einer an sich mit Bezug auf Pflanzenwachstumförderung bekannten Nährlösung aktiviert ist.

4. Düngemittel nach einem der Ansprüche 1 bis 3, dadurch gekennzeichnet, daß der Zeolithein Clinoptilolith mit folgenden Merkmalen ist:

| | |
|---|---|
| $SiO_2$ | 61,96 bis 67,17 |
| $TiO_2$ | 0,15 bis 0,23 |
| $Al_2O_3$ | 12,46 bis 15,20 |
| $Fe_2O_3$ | 0,98 bis 2,05 |
| $MnO$ | Spuren bis 0,05 |
| $MgO$ | 1,30 bis 1,96 |
| $CaO$ | 3,03 bis 4,35 |
| $Na_2O$ | 0,70 bis 1,11 |
| $K_2O$ | 0,78 bis 1,32 |
| $H_2O$ -Verlust (100°C) | 4,05 bis 4,74 |
| $H_2O$-Verlust (1000°C) | 7,56 bis 9,56 |

5. Düngemittel nach einem der Ansprüche 1 bis 3, dadurch gekennzeichnet, daß das Mineraldüngemittel mit kalzifizierender Wirkung ein feingemahlenes Sedimentmineral mit etwa folgender Zusammensetzung ist:

| | |
|---|---|
| Wasser | 6,41 % |
| Rohasche | 89,40 % |
| Organ. Substanz | 4,19 % |
| Salzsäure unlösl. (Sand + Ton) | 11,66 % |
| Gesamt Stickstoff n. Kjeldahl | 0,010 % |
| Gesamt-Phosphor $P_2O_5$ | 0,02 % |
| Gesamt Kalium $K_2O$ | 0,19 % |
| Calcium $CaO$ | 38,56 % |
| Magnesium $MgO$ | 2,29 % |
| Natrium $Na_2O$ | 0,12 % |
| pH | 8,85 |
| Kohlensäure $CO_2$ | 32,83 % |
| $CaCO_3$ (ber. aus $CO_2$) | 74,66 % |
| $Fe_2O_3$ | 0,92 % |
| $Al_2O_3$ | 2,71 % |
| Kupfer Cu | 4,4 mg/kg |
| Mangan Mn | 136 " / " |
| Eisen Fe | 6 450 " / " |
| Zink Zn | 15 " / " |
| Kobalt Co | 1,50" / " |
| Molybdän Mo | 0,75" / " |

6. Verfahren zur Herstellung eines Düngemittels nach einem der Ansprüche 3 bis 5, dadurch gekennzeichnet, daß man den Zeolithen mit einer wässerigen Nährlösung mischt, und die so erhaltene Masse mit dem Mineraldüngemittel vermischt, wobei man, bezogen auf den Zeolithen 8 bis 12 Gew.-%, vorzugsweise 10Gew.-% Nährlösung und 50 bis 70 Gew.-%, vorzugsweise 60 Gew.-% Mineraldüngemittel einsetzt.

7. Düngemittel, dadurch gekennzeichnet, daß es einen Calcium und Magnesium enthaltenden Zeolithen mit einem Gehalt von etwa 60 -75 % $SiO_2$ und 10 -20 % $Al_2O_3$ und ein Mineraldüngemittel mit kalzifizierender Wirkung enthält, das eine kalzifizierende Wirkung hat.

8. Düngemittel nach einem der Ansprüche 1 oder 7, dadurch gekennzeichnet, daß es 30 -70 Gew.-% Zeolith und 70 -30 Gew.-% Mineraldüngemittel mit kalzifizierender Wirkung enthält.

9. Düngemittel nach einem der Ansprüche 1 oder 7, dadurch gekennzeichnet, daß das Düngemittel mit kalzifizierender Wirkung Thomasmehl ist.

10. Düngemittel nach einem der Ansprüche 1 oder 7, dadurch gekennzeichnet, daß das Düngemittel mit kalzifizierender Wirkung Flugasche ist.